# EUROPEAN PATENT SPECIFICATION

(11) **EP 0 461 790 B1**
(45) Date of publication and mention of the grant of the patent: **26.01.1994**
(21) Application number: 91304985.4
(22) Date of filing: 03.06.1991
(51) Int. Cl.: F16B 13/06

(54) **Anchor bolt**
Ankerbolzen
Boulon d'ancrage

(30) Priority: 06.06.1990 JP 149481/90
(43) Date of publication of application: 18.12.1991
(73) Proprietor: YUGENKAISHA SHINJO SEISAKUSHO, Nishinariku, Osaka (JP)
(72) Inventor: Shinjo, Katsumi, Osaka (JP)
(74) Representative: Purvis, William Michael Cameron

(56) References cited:
- EP-A- 0 015 305
- WO-A-83/03645
- US-A- 4 613 264

## Description

The invention relates to an anchor bolt.

Such an anchor bolt can be used to fix various mechanical parts such as piping, on a concrete structure such as a wall, a ceiling or a floor.

Previously proposed anchor bolts have comprised a threaded rod, an expansion body formed at one end of the threaded rod and an expansion sleeve fitted on the threaded rod and to be expanded by the expansion body so as to hold the anchor bolt in a hole in, for example, a concrete structure.

Although such anchor bolts have many advantages due to their simple structure and ease of use in construction work, a violent vibration such as an earthquake may cause some problems with the anchor bolt. More particularly, vibration may cause cracks in the wall defining the hole, thereby releasing the anchor bolt from the hole or allowing it gradually to move outwardly.

Anchor bolts have been proposed, for example, in Japanese Tokkai Publication No. 63-285310 or in United States Patent Specification 4,613,264, which comprise a spring member employed to solve the problem mentioned above, with the spring member being interposed between the expansion body and a stopper formed on a threaded rod of the anchor body so that a force pulling the threaded rod outwardly acts on the expansion body through the spring member and expands the expansion sleeve.

However, in such previously proposed anchor bolts including a spring member, a satisfactory force in the axial direction effective to expand the expansion sleeve is not obtained unless the pulling force acting on the threaded rod completely compresses the spring member, or until the expansion body bears against the stopper. Consequently, an extractable length of the threaded rod has to be increased to ensure a satisfactory force in the axial direction. This requirement inevitably increases the length of the threaded rod in its unextracted state, thus making cumbersome the tightening of a nut which mates with the threaded rod. Further, previously proposed anchor bolts including a spring member are composed of more parts than the traditional anchor bolt, causing a higher manufacturing cost. A still further disadvantage in construction work is that a hole to receive the anchor bolt must be drilled deeper into the concrete structure.

According to the invention there is provided an anchor bolt comprising a threaded rod, a fastening sleeve, an expansion sleeve and an expansion body, wherein a spring member is interposed between the fastening sleeve and the expansion sleeve; the expansion sleeve is disposed at one end portion of the threaded rod to cooperate with the expansion body to be expanded thereby; the fastening sleeve and the spring member are loosely fitted on the threaded rod; the fastening sleeve, upon engagement with an inlet portion of a hole in a concrete structure, compresses the spring member to urge the expansion sleeve onto the expansion body so as to be expanded by the expansion body inserted deep in the hole and the fastening sleeve has an opening therein through which an end portion of the spring member extends so as to be exposed to the outside.

The threaded rod of such an anchor bolt can be of substantially the same size and shape as that included in a conventional anchor bolts, but the expansion of the expansion sleeve can nevertheless surely be effected to secure the threaded rod in a hole in a concrete structure, without fear of removal or loosening of the rod even in a case where cracks are likely to be produced around the hole due to violent vibrations such as an earthquake.

The opening through which an end portion of the spring member extends allows a visual check thereon.

The expansion body disposed at the end portion of the threaded rod may either be formed integral with the threaded rod, or be formed as a nut mating therewith.

In operation, the threaded rod is inserted into the hole with its expansion body leading the other parts. The fastening sleeve is then forced into the inlet portion of the hole so as to be fixed therein. As a result, the spring member which is thus compressed by the fastening sleeve will expand the expansion sleeve, thereby securing the threaded rod in the hole.

The spring member always strongly urges the expansion sleeve toward the expansion body so that this sleeve is displaced from its original position to a new position nearer the expansion body if vibration causes cracks which would otherwise cause disengagement of the surface of the expansion sleeve from the inner wall surface of the hole. Such a displacement of the expansion sleeve results in additional expansion thereof which restores the rigid and enforced engagement of the sleeve with the wall surface.

On the other hand, the end portion of the spring member is exposed to the outside through the opening of the fastening sleeve which is compelled to fit the inlet portion of the hole.

The expansion sleeve can be sufficiently expanded by the spring member merely by the striking of the fastening sleeve into a hole in the concrete structure. The threaded rod forming the anchor main body is thus firmly fixed in the hole in such a stable state that any possible cracks on the inner wall which could take place around the hole due to strong vibrations such as an earthquake cannot cause removal or loosening of the threaded rod.

The anchor bolt can be manufactured at a lower cost because it is simple in its structure comprising a smaller number of parts, particularly since the length and shape of the threaded rod itself need not be substantially different from those of the known usual anchor bolt.

Visual inspection of the spring member makes it possible to check for the presence thereof during construction work because the end of the spring member is exposed to the outside through the opening of he fastening sleeve.

The invention is diagrammatically illustrated by way of example with accompanying drawings, in which:
Figure 1 is a front elevation of an anchor bolt according to the invention;
Figures 2 and 3 are front elevations showing partially in cross section, the anchor bolt of Figure 1 in installation and use respectively;
Figure 4 is a front elevation of another anchor bolt according to the invention; and
Figure 5 is a front elevation showing, partially in cross section, the anchor bolt of Figure 4 in use.

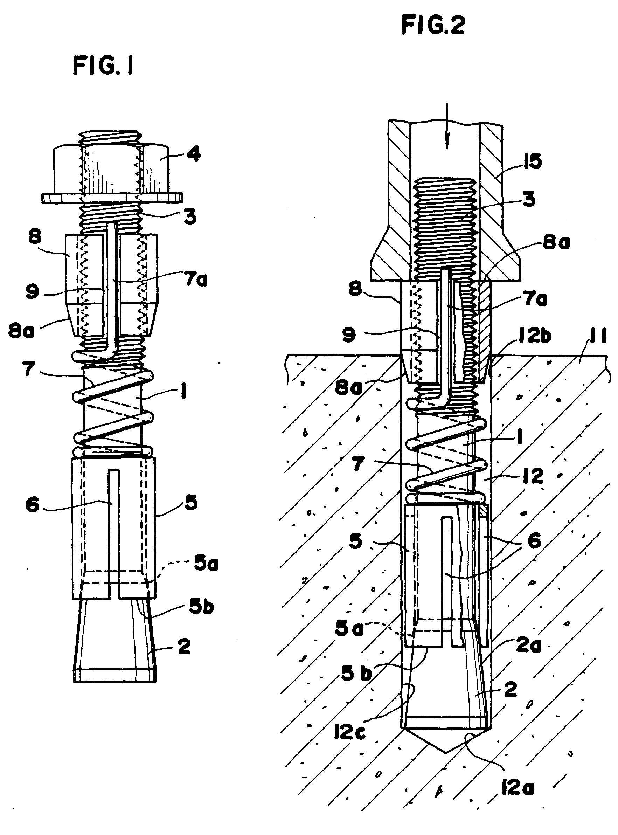

Referring to the drawings and firstly to Figure 1, an anchor bolt has a threaded rod as an anchor main body. The threaded rod 1 comprises an expansion member 2 formed integral with one portion of the threaded rod 1, with the expansion body 2 being of a frustum shape and having a tapered surface 2a whereby the diameter of the expansion body 2 increases towards the free end. The threaded rod 1 further comprises at its other end portion a male thread 3 which can receive a fastening nut 4. The shape of the threaded rod 1 is similar to previously proposed anchor bolts of this kind.

An expansion sleeve 5, fitted loosely on the threaded rod 1, is manufactured, either by cutting a predetermined length of a thin-walled metal pipe or by powder metallurgy, into a thin wall cylindrical shape. Formed at an inner surface of an expansible part near one extremity 5b of the expansion sleeve 5 is a chamfered surface 5a which abuts the tapered surface 2a of the expansion body 2. A plurality of slits 6 are formed to extend in the axial direction from the extremity 5b of the expansion sleeve 5 whereby the expansion sleeve 5 can readily be expanded solely by a resilient force exerted by a spring member 7 which will be described below.

The spring member 7 urges the expansion sleeve 5 toward the expansion body 2, and is preferably a coiled spring made by coiling a spring steel wire into a helical shape of substantially the same outer diameter as the expansion sleeve 5. The spring member 7 is loosely mounted in an uncompressed state on the threaded rod 1, with one end bearing against the other extremity of the expansion sleeve 5.

A cylindrical fastening sleeve 8, made of a metal, has an outer diameter slightly greater than that of the expansion sleeve 5. The fastening sleeve 8 has an inner diameter also slightly greater than the outer diameter of the male thread 3. A tapered portion 8a is formed at one end of the fastening sleeve 8 in such a manner as gradually to decrease the outer diameter of the fastening sleeve toward said one end. A portion extending in the axial direction of the fastening sleeve 8 is cut out to form an opening 9 which extends between said one end and the other end of the fastening sleeve. The fastening sleeve 8 is loosely fitted on the threaded rod 1, after the spring member 7 and a trailing straight end portion 7a extending from and in the axial direction of the spring member 7 is exposed to the outside through the opening 9 after the fastening sleeve 8 is mounted on the rod 1.

In use, the nut 4 is removed from the threaded rod 1 before the threaded rod is inserted in a hole 12 drilled in a concrete structure 11, with its expansion body 2 leading the other parts of the anchor. After a leading thick end of the expansion body 2 has reached a bottom 12a of the hole so as to be supported thereon, a cylindrical pressing tool 15 is fitted onto the end of the threaded rod 1 such that the tool 15 comes into pressing contact with the outer end 8b of the fastening sleeve 8.

The pressing tool 15 is then struck forcibly to insert the fastening sleeve 8 into the hole 12 and to secure it in an inlet portion 12b thereof whereby the fastening sleeve 8 compresses the spring member 7. The compressed spring member 7 urges the expansion sleeve 5 toward the expansion body 2 so that the sleeve 5 is expanded diametrically by the tapered surface 2a of the body 2 to such a degree that the sleeve 5 engages a wall surface 12c of the hole 12, thus fixing the threaded rod 1 within the hole 12. In this state, the trailing end portion 7a of the spring member 7 extends through the opening 9 of the fastening sleeve 8 and is exposed to the outside, allowing visual inspection of the presence or absence of the spring member 7.

Finally, the nut 4 is threaded onto the male thread 3 of the threaded rod 1 fastened in the concrete structure 11 in order to secure thereon an object 13 to be mounted. It is to be noted that the thus threaded nut 4 exerts a force pulling the threaded rod 1 thereby further to ensure the expansion of the expansion sleeve 5.

As already described hereinbefore, the spring member 7 always urges the expansion sleeve 5 of the anchor bolt which is securely set in the hole 12 toward the expansion body 2. Therefore, the expansion sleeve 5 automatically moves toward the expansion body 2 in the event of violent vibrations such as an earthquake which might cause cracks in the wall surface 12c of the hole 12 and, consequently, disengagement of the expansion sleeve 5 from the wall 12c. Such a spontaneous displacement further expands the expansion sleeve 5 to re-engage the wall 12c, thereby keeping the threaded rod 1 retained firmly within the hole.

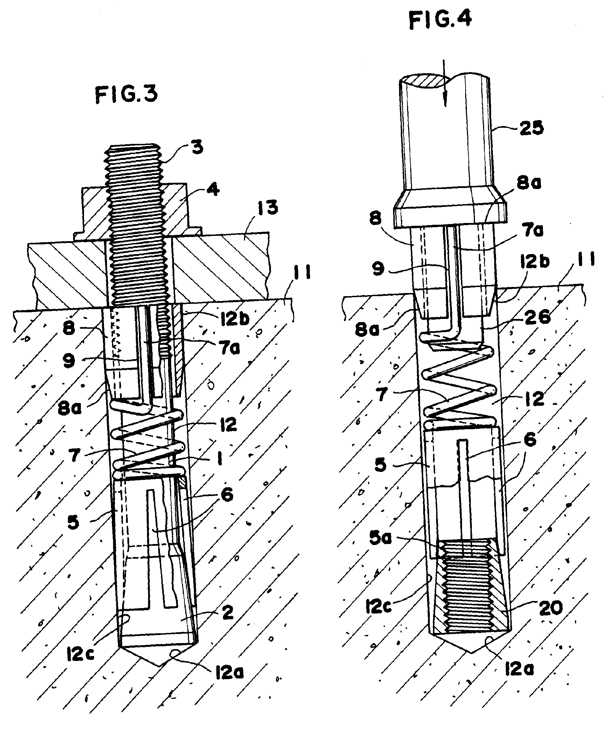

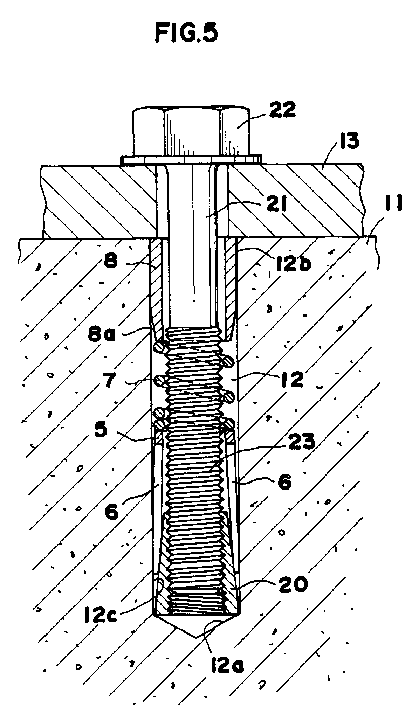

In the embodiment of the Figures 4 and 5, the expansion body 2 is formed as a nut 20 through which is threaded a male thread 23 of a bolt 21 having a head 22.

In this case, the bolt 21 is first removed as shown in Figure 4, and then the nut 20, the expansion sleeve 5, the spring member 7 and the fastening sleeve 8 are inserted, in the hole 12 in that order. A pressing tool 25 having a guiding protrusion 26 is used to strike the fastening sleeve 8 into the inlet portion 12b of the hole 12. The fastening sleeve 8 compresses the spring member 7 forcibly to expand the expansion sleeve 5.

Since the expansion body 2 is shaped as a nut 20 in the embodiment of Figures 4 and 5, the bolt 21 shown in Figure 5 is used in place of the threaded rod 1 to fasten the object 13 to the concrete structure 11.

## Claims

1. An anchor bolt comprising a threaded rod (1, 21), a fastening sleeve (8), an expansion sleeve (5) and an expansion body (2, 20), wherein a spring member (7) is interposed between the fastening sleeve (8) and the expansion sleeve (5); the expansion sleeve (5) is disposed at one end portion of the threaded rod (1, 21) to co-operate with the expansion body (2, 20) to be expanded thereby; the fastening sleeve (8) and the spring member (7) are loosely fitted on the threaded rod (1, 21); the fastening sleeve (8), upon engagement with an inlet portion (12b) of a hole (12) in a concrete structure, compresses the spring member (7) to urge the expansion sleeve (5) onto the expansion body (2, 20) so as to be expanded by the expansion body (2, 20) inserted deep in the hole (12) and the fastening sleeve (8) has an opening (9) therein through which an end portion (7a) of the spring member (7) extends so as to be exposed to the outside.

2. An anchor bolt according to claim 1, wherein the expansion body (2) is formed integral with the threaded rod (1).

3. An anchor bolt according to claim 1, wherein the expansion body is formed as a nut (20) into which an end portion of the threaded rod (21) is threaded.

## Patentansprüche

1. Ankerbolzen mit einer Gewindestange (1, 21), einer Befestigungshülse (8), einer Dehnungshülse (5) und einem Dehnungskörper (2, 20), wobei ein Federteil (7) zwischen der Befestigungshülse (8) und der Dehnungshülse (8) angeordnet ist, die Befestigungshülse (5) an einem Endabschnitt der Gewindestange (1, 21) angeordnet ist, um mit dem Dehnungskörper so zusammenzuwirken, daß sie dadurch gedehnt wird, die Befestigungshülse (8) und das Federteil (7) lose auf die Gewindestange (1, 21) aufgesetzt sind, die Befestigungshülse (8) beim Eingriff mit einem Einlaßabschnitt (12b) eines Loches in einem Betonaufbau das Federteil (7) zusammenpreßt, um die Dehnungshülse (5) auf den Dehnungskörper (2, 20) zu drücken, so daß sie durch den Dehnungskörper (2, 20), welcher tief in das Loch (12) eingesetzt wird, gedehnt wird, und die Befestigungshülse (8) eine Öffnung (9) darin hat, durch welche ein Endabschnitt (7a) des Federteiles (7) sich so erstreckt, daß es zur Außenseite hin offen liegt.

2. Ankerbolzen nach Anspruch 1, wobei der Dehnungskörper (2) einstückig mit der Gewindestange (1) ausgebildet ist.

3. Ankerbolzen nach Anspruch 1, wobei der Dehnungskörper als Mutter (20) ausgebildet ist, in welche ein Endabschnitt der Gewindestange (21) eingeschraubt ist.

## Revendications

1. Boulon d'ancrage comprenant une tige filetée (1, 21), un manchon de fixation (8), un manchon à élargissement (5) et un corps d'élargissement (2, 20), dans lequel un ressort (7) est disposé entre le manchon de fixation (8) et le manchon à élargissement (5); le manchon à élargissement (5) est disposé à une portion d'extrémité de la tige filetée (1, 21) pour coopérer avec le corps d'élargissement (2, 20) pour être élargi par celui-ci; le manchon de fixation (8) et le ressort (7) sont ajustés avec jeu sur la tige filetée (1, 21); le manchon de fixation (8), lors de son engagement avec une portion d'entrée (12b) d'un trou (12) dans une structure en béton, comprime le ressort (7) pour amener le manchon à élargissement (5) sur le corps d'élargissement (2, 20) de manière à être élargi par le corps d'élargissement (2, 20) inséré profondément dans le trou (12) et le manchon de fixation (8) comporte une ouverture (9) en son sein dans laquelle une portion d'extrémité (7a) du ressort (7) s'étend pour être exposée à l'extérieur.

2. Boulon d'ancrage selon la revendication 1, dans lequel le corps d'élargissement (2) est d'un seul tenant avec la tige filetée (1).

3. Boulon d'ancrage selon la revendication 1, dans lequel le corps d'élargissement a la forme d'un écrou (20) dans lequel une portion d'extrémité de la tige filetée (21) est vissée.
